Europäisches Patentamt

European Patent Office

Office européen des brevets

(19)

(11) EP 0 486 362 B1

(12) **FASCICULE DE BREVET EUROPEEN**

(45) Date de publication et mention
de la délivrance du brevet:
**12.06.1996 Bulletin 1996/24**

(51) Int Cl.6: **H04L 12/40**, H04Q 7/20,
H04L 12/56

(21) Numéro de dépôt: **91402986.3**

(22) Date de dépôt: **07.11.1991**

(54) **Procédé de transmission de données entre mobiles ou véhicules autonomes**

Verfahren zur Datenübertragung zwischen beweglichen Stationen oder eigenständigen Fahrzeugen

Method for data transmission between mobile stations or autonomous vehicles

(84) Etats contractants désignés:
**DE ES GB IT SE**

(30) Priorité: **14.11.1990 FR 9014148**

(43) Date de publication de la demande:
**20.05.1992 Bulletin 1992/21**

(73) Titulaire: **THOMSON-CSF**
**75008 Paris (FR)**

(72) Inventeurs:
• **Michalon, Gilles**
**F-92045 Paris la Défense (FR)**
• **Auger, Gérard**
**F-92045 Paris la Défense (FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

(56) Documents cités:
**EP-A- 0 097 309**          **EP-A- 0 270 391**
**US-A- 4 672 657**

• **ICC '80 CONFERENCE RECORD, Seattle, WA,
8-12 juin 1980, pages 21.4.1 - 21.4.7, IEEE, New
York, US; P. SPILLING et al.: "Digital voice
communications in the packet radio network"**

## Description

La présente invention concerne un procédé de transmission de données entre mobiles ou véhicules autonomes ne disposant d'aucune référence temporelle absolue, et communiquant entre eux par voie hertzienne sur un canal unique avec une portée limitée telle que le temps de propagation reste négligeable comparativement au temps de réaction $t_r$ des récepteurs.

Avec un tel procédé si on admet qu'un véhicule est en portée utile lorsque le rapport signal/bruit en réception reste correcte, le seul risque de non-réception d'un message provient de sa collision avec un autre message émis au même instant dans un même périmètre par un autre véhicule.

Les collisions ont lieu notamment par exemple lorsque deux véhicules B et C en portée d'un même troisième A, émettent simultanément vers celui-ci. Deux cas peuvent alors se produire selon que les deux véhicules émetteurs B et C sont en liaison, c'est-à-dire sont à portée radioélectrique l'un de l'autre ou que les deux véhicules émetteurs ne sont pas en liaison, et sont cachés l'un pour l'autre par un troisième A interposé entre eux deux.

Dans le premier cas, des procédures connues sous l'abréviation anglo-saxonne CSMA, voir par example EP-A-0 270 391, de "Carrier Sense Multiple Access", c'est-à-dire d'écoute de liberté de canal avant émission, permettent de diminuer fortement les collisions.

Cependant, dans le deuxième cas, aucune procédure d'accès ne permet d'éviter ces collisions, et ceci est préjudiciable à de nombreuses applications telles par exemple celles concernant la sécurité routière sur route ou urbaine dans lesquelles il est impératif de réaliser des transmissions correctes d'au moins un message durant des périodes de temps déterminées relativement courtes, par exemple de 100 ms, vers d'autres mobiles ou véhicules en portée utile.

Le but de l'invention est de pallier les inconvénients précités.

A cet effet, l'invention a pour objet un procédé de transmission de données entre mobiles ou véhicules autonomes communiquant entre eux par voie hertzienne sur un canal radio unique avec une portée d'émission limitée et une récurrence d'émission T déterminée caractérisé en ce qu'il consiste à construire dans chaque émetteur-récepteur de mobile ou de véhicule des tables d'information consignant l'évolution du canal radio en mémorisant pendant des intervalles de temps consécutifs de durée déterminée dT inférieurs à la période T de récurrence, les états "en collision" "occupé" ou "libre" du canal radio, à fixer dans chaque émetteur-récepteur des instants d'émission, espacés de la période de récurrence T, à prédire l'état du canal pour chaque instant d'émission fixé en fonction de l'état du canal mémorisé à l'instant qui lui précède décalé de la période T et à décider d'émettre à cet. instant lorsque l'état du canal prédit n'est pas en collision ou d'émettre à instant différé de l'instant prédit dans le cas contraire.

Le procédé selon l'invention a pour principal avantage qu'il permet à des ensembles de mobiles ou de véhicules en liaison ou en portée radioélectrique les uns avec les autres, n'ayant a priori aucune connaissance de leur nombre, ni aucune indication sur l'état et l'évolution des liaisons et ne disposant d'aucune référence temporelle commune, d'émettre et de recevoir en minimisant de façon très importante les risquues de collision d'émissions.

D'autres caractéristiques et avantages de l'invention apparaîtront ci-après à l'aide de la description qui suit faite en regard des dessins annexés qui représentent :

la figure 1 un organigramme pour illustrer une procédure d'accès à un canal de transmission selon l'invention ;
la figure 2 un diagramme des temps pour illustrer le principe selon l'invention de détermination de l'état local d'un canal de transmission ;
les figures 3 et 4 des graphes de temps pour illustrer le processus de création de tables d'état global du canal ;
la figure 5 un graphe de temps illustrant un processus d'émission effectué par trois mobiles ;
la figure 6 un organigramme pour illustrer un mode de fonctionnement en émission de deux mobiles, sans qu'il y ait collision entre émissions ;
la figure 7 un schéma illustrant une configuration de fonctionnement entre deux mobiles appartenant à deux groupes de mobiles différents ;
la figure 8 un graphe des temps illustrant un mode de report d'émission effectué par un mobile ;
la figure 9 un graphe pour illustrer un mode de détection de collision entre deux mobiles.

Le procédé selon l'invention qui est décrit ci-après, s'applique particulièrement aux cas où les mobiles ou les véhicules ne disposent comme sources d'informations pour communiquer par voie hertzienne les uns avec les autres que de l'état de leur canal radioélectrique local, de la qualité des messages qu'ils reçoivent des autres mobiles ou véhicules, et de leur référence temporelle qui pour chaque émetteur-récepteur de mobile ou de véhicule dépend de la précision de leur oscillateur pilote.

Bien naturellement, le procédé s'applique également au cas où véhicules ou mobiles circulent dans un environnement de balises radioélectriques disposées sur leur parcours chaque balise étant équipée des mêmes moyens de communications que ceux équipant les mobiles ou les véhicules. Une balise étant de ce point de vue considérée comme un mobile ou un véhicule à l'arrêt.

Selon l'invention, l'état du canal radioélectrique est analysé en considérant seulement trois états, un état "libre" durant lequel aucune émission n'est captée par le mobile ou le véhicule, un état "occupé" durant lequel le mobile ou le véhicule peuvent démoduler une émission et un état "en collision" durant lequel le mobile oui le véhicule détectent de la puissance radioélectrique sur le canal sans pouvoir en décripter une information cohérente. L'échange de données entre mobiles ou véhicules est organisé de manière que chaque fois qu'un mobile ou véhicule tente d'émettre un message il le fasse de façon récurrente suivant une période T toutes les 100 ms par exemple en envoyant au sein de ce message un certain nombre de bits de signalisation indiquant l'état local du canal radio.

Avant d'émettre, le mobile oui le véhicule doivent déterminer l'état global du canal radio à partir des bits de signalisation contenus dans les messages qu'ils ont déjà reçus.

Si à cet instant le canal est vu "Libre" ou "Occupé" le mobile ou le véhicule émettent.

Par contre, si le canal est vu "En collision", le mobile ou le véhicule repoussent son émission de façon aléatoire à un instant suivant reconnu comme "libre".

Après une phase transitoire, chaque mobile ou véhicule peut ainsi déterminer un instant d'émission sans collision, et peut ainsi émettre de façon périodique et sans collision à la fréquence 1/T.

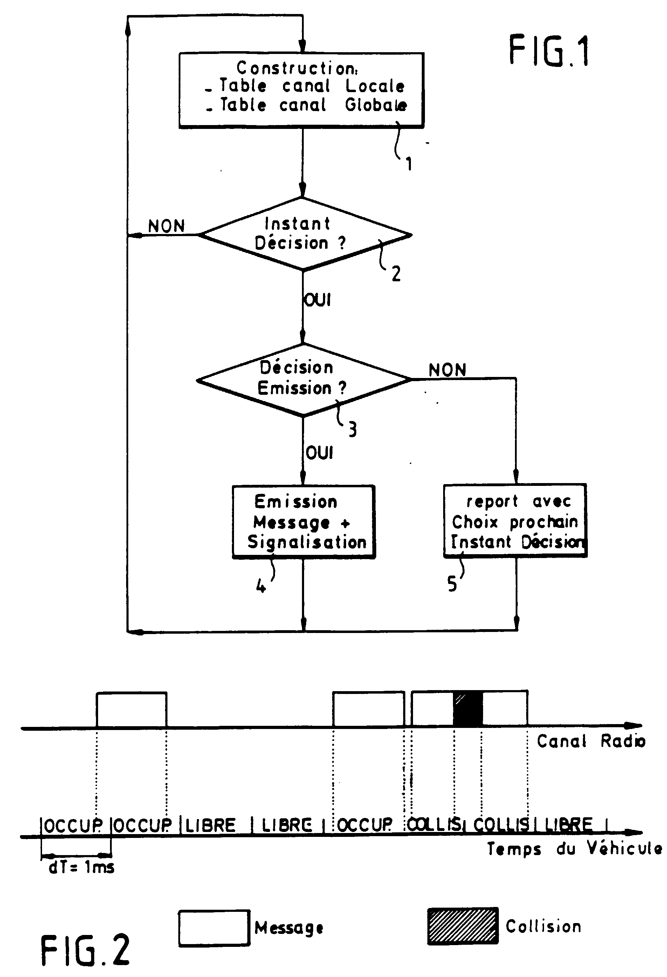

La procédure d'accès qui est représentée à la figure 1 comporte cinq étapes de traitement. Une première étape référencée en 1 sur la figure 1 consiste à construire des tables représentant l'évolution de l'état du canal radio obtenu soit localement à partie de son écoute soit globalement, avec un retard égal à la période T de récurrence des émissions, à partir de bits de signalisation contenus dans les messages reçus. L'étape 1 dure jusqu'à l'arrivée à l'étape 2 d'un instant de décision d'émission déterminé lors de la récurrence précédente. La troisième étape 3 consiste à décider de l'instant d'émission à partir des informations contenues dans la table d'évolution globale du canal construite à l'étape 1. La quatrième étape 4 consiste à effectuer l'émission du message utile et des bits de signalisation représentant l'évolution locale du canal, et à fixer le prochain instant d'émission après le déroulement d'une période de temps T plus tard. Enfin l'étape 5 consiste à reporter l'émission, avec un calcul d'un prochain instant de décision d'émission et avec une mise à jour des tables précédentes si à l'étape 3 aucune décision pour émettre n'a été prise.

Comme il a déjà été précisé lors de la description de l'étape 1 chaque mobile construit deux tables différentes relativement à l'état du canal, vu pendant une durée T de récurrence à savoir une table représentant l'état local instantané et une table représentant l'état global à un instant précédant d'une durée de récurrence T l'instant d'émission.

La construction de la table d'état local a lieu en tenant compte de la récurrence T des émissions et de la durée dT des messages. L'état du canal est déterminé par pas de durée égale à 1 ms par exemple. A chaque émission, le véhicule émet, en plus du message utile, T/dT éléments d'informations représentant l'état du canal analysé suivant les trois états "LIBRE", "OCCUPE" ou "EN COLLISION".

Ainsi pendant chaque tranche élémentaire de temps dT, le mobile scrute le canal radio et comme les différents mobiles ne sont pas synchronisés, durant chaque instant élémentaire dT, le canal radio peut évoluer plusieurs fois entre les trois états précédents. Dans ces conditions, l'état du canal pendant la durée dT peut être déterminé en respectant par exemple les choix suivants :

- si le canal a été vu à un instant de "collision", tout l'intervalle dT est considéré comme "en collision" ;
- si le canal a été vu un instant "occupé", sans collision sur l'intervalle de temps dT tout l'intervalle est considéré comme "OCCUPE" ;
- et l'intervalle dT peut être considéré comme "LIBRE" s'il n'y a eu ni collision, ni message émus pendant cet intervalle,
  ou éventuellement d'autre choix par pondération des états du canal et comparaison a un ou plusieurs seuils prédéterminés.

Comme chaque mobile ne peut scruter l'état du canal pendant la durée durant laquelle il émet et qui est aussi égale à dT, cet intervalle de temps n'est pas émit dans les informations de signalisation.

Ainsi, dans le cas où T = 100 ms et dT = 1 ms il suffit d'envoyer 99 éléments d'informations codés sur trois états, soit 157 bits = $(\log_2(3^{99}))$. Une représentation de ce mécanisme est montrée à la figure 2.

La table d'état global est construite à partir des tables d'état local transmises par les autres mobiles ou véhicules dans leurs messages.

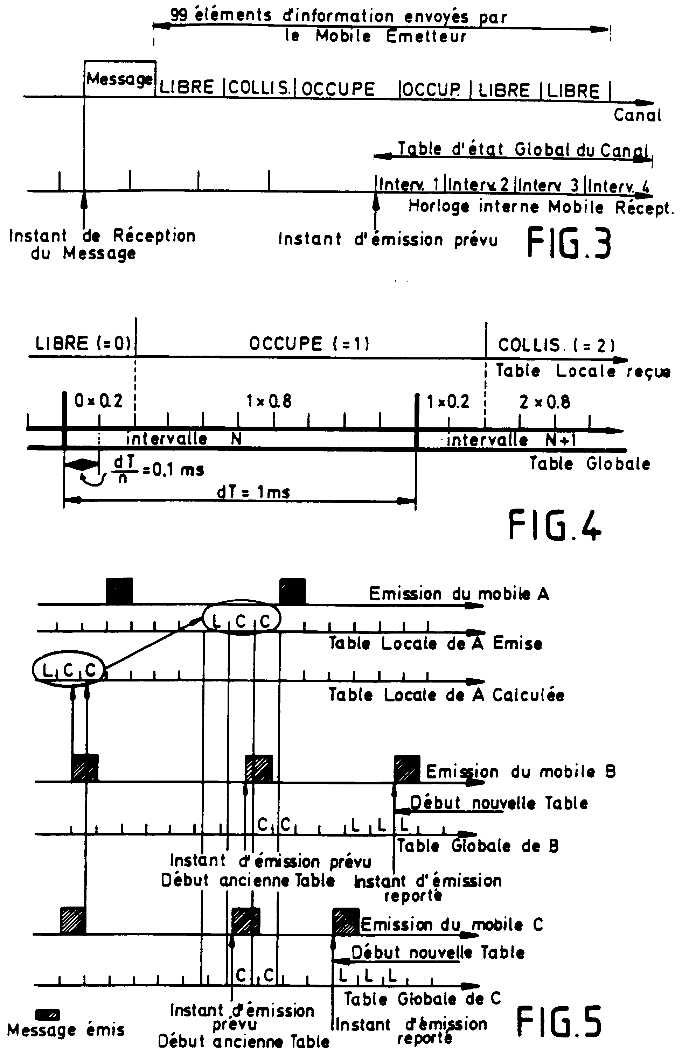

Le mobile récepteur crée la table d'état global par intervalles dT (comme la table d'état local), en la commençant par son prochain instant d'émission prévu comme représenté à la figure 3.

Les trois états possibles du canal, "LIBRE", "OCCUPE", et "EN COLLISION" sont affectés d'un poids numérique, par exemple respectivement 0, 1 et 2.

L'affectation numérique d'une valeur, pour chaque intervalle dT de la table d'état global du mobile récepteur, est faite en multipliant le poids de l'état du canal sur un intervalle dT de la table local du mobile émetteur par sa partie commune avec cet intervalle de la table globale du mobile récepteur, de la manière représentée à la figure 4.

Sur la figure 4 l'intervalle N de durée dT est affecté de la valeur 0.8=(0 × 0.2 + 1 × 0.8), et l'intervalle N + 1 est affecté de la valeur 1. 8= (1 × 0.2 + 2 × 0.8).

Pour chaque message reçu la même affectation est réalisée et la valeur moyenne de chaque intervalle de la table d'état global par le nombre d'affectations effectuées est calculée.

La détermination de l'état du canal, pour chaque intervalle dT est faite en comparant la valeur moyenne de chaque intervalle à deux seuils, S1 et S2 :

- si la valeur moyenne est supérieure à S1, l'intervalle est considéré comme "EN COLLISION" ;
- si la valeur moyenne est comprise entre S1 et S2, l'intervalle est considéré comme "OCCUPE" ;
- si la valeur moyenne est inférieure à S2, l'intervalle est considéré comme "LIBRE".

Les valeurs de S1 et de S2 sont à déterminer expérimentalement, et typiquement celles-ci peuvent être fixées de façon telles que S1 = 1.3 et S2 = 0.3 en reprenant l'exemple numérique précédent.

La table d'état global du canal représente ainsi pour chacun de ses intervalles, l'état du canal dans le périmètre de portée utile des plus proches voisins du mobile récepteur à la période de temps T qui précède.

La phase de décision de l'émission de l'étape 2 commence à l'instant de dérision de l'émission déterminé lors de la précédente récurrence.

Elle commence par l'analyse de l'intervalle de la table d'état global du canal correspondant à l'instant d'émission prévu.

Si l'intervalle est "LIBRE" oui "OCCUPE", l'émission a lieu normalement à l'instant prévu. La procédure se poursuit, alors par la phase d'émission de l'étape 4.

Si l'intervalle est "EN COLLISION", cela signifie qu'il y a un conflit d'accès sur cet intervalle de temps. L'émission n'a alors pas lieu et la procédure continue par la phase de report d'émission de l'étape 5 avec détermination d'un nouvel instant de décision et d'émission.

Pour préparer la phase d'émission le mobile construit par exemple le message à émettre en entrelaçant les bits de données et les bits de signalisation.

Le prochain instant d'émission est alors fixé à une période de temps T plus tard.

Le mobile émet son message, qui dure dT, et la procédure retourne à la phase d'écoute de canal et de construction des tables de l'étape 1.

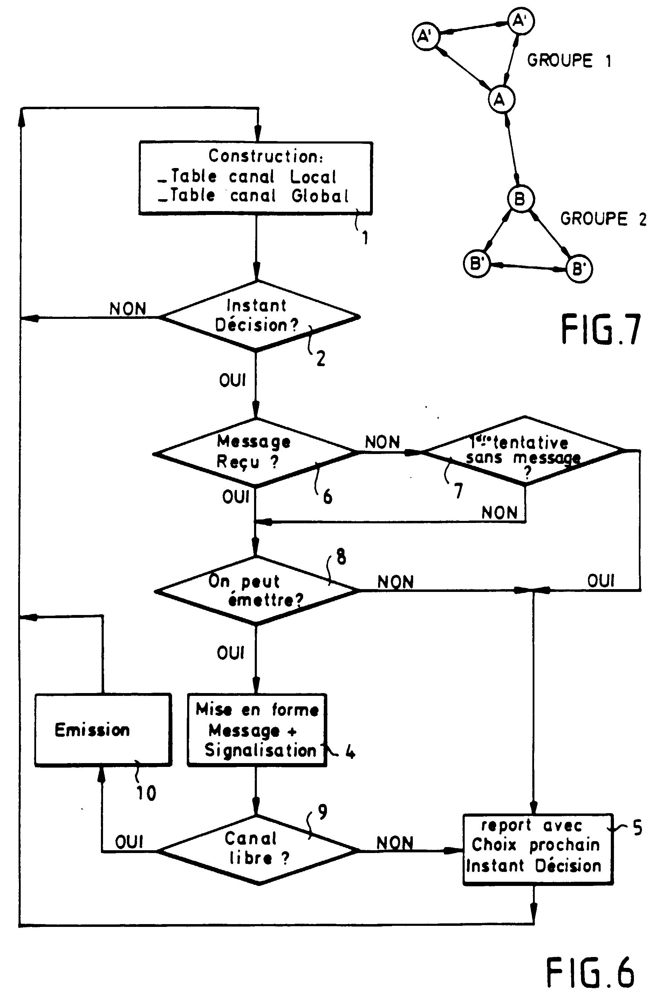

La phase de report d'émission de l'étape 5 a lieu lorsqu'il y a eu collision sur le canal radio lors de la précédente émission du mobile. Comme représenté à la figure 5 le mobile analyse durant l'étape 5 la table d'état global, mémorise les intervalles de temps dT libres lors du dernier intervalle de récurrence et en choisit un aléatoirement, cet instant devant correspondre au prochain instant T d'émission.

La détermination aléatoire de la durée du report, permet de diminuer considérablement les risques de collision entre les mêmes mobiles lors d'une prochaine émission.

Une fois l'instant d'émission déterminé, le mobile remet à jour sa table d'état global en la décalant pour la commencer au nouvel instant d'émission déterminé précédemment.

La procédure retourne ensuite à la phase d'écoute de canal et de calcul des tables de l'étape 1.

Après une phase transitoire chaque mobile a déterminé un instant d'émission sans collision et peut ainsi émettre de façon périodique à la période T de récurrence.

La procédure précédente ne permet cependant pas de résoudre le cas particulier où il n'y a que deux mobiles ou véhicules en liaison qui ont leurs émissions synchronisées à dT près. Dans ce cas leurs messages seront en collision. En l'absence de mobile extérieur pour leur indiquer cette collision, les deux mobiles ou véhicules s'ignorent et ne peuvent pas modifier leurs instants d'émission.

Une écoute de liberté de canal avant d'émettre, peut permettre de résoudre ce problème jusqu'à une synchronisation de durée $t_r$ égale au temps de réaction des récepteurs, entre les deux mobiles.

En effet, en reprenant l'exemple numérique précédent, et en fixant par exemple le débit de transmission envisagé à 1Mbit/s, il faudrait à un récepteur classique environ 100 bits pour se synchroniser sur une émission cohérente, soit dans ce cas un $t_r = 100\,\mu s$. Dès lors, une écoute de canal inférieure à 100 μs ne peut pas permettre de détecter le début d'une émission d'un mobile dans cet intervalle et une procédure complémentaire s'avère donc nécessaire, cette procédure pouvant en fait consister en une phase d'initialisation, lorsque le réseau se crée ou s'étend pour la première fois entre deux véhicules.

Trois solutions apparaissent également possibles pour résoudre ce problème, l'une consistant en une phase d'initialisation particulière, une autre consistant à décaler dans le temps l'instant d'émission et la troisième consistant à couper à l'émission le message en deux parties séparées par une phase d'écoute de durée $t_r$.

La solution par phase d'initialisation qui est représentée par les étapes 1 à 10 de la figure 6 ou les étapes homologues à celles de la figure 1 sont représentées avec les mêmes références, peut par exemple être adoptée lorsque le mobile n'a reçu aucun message durant les 100 ms suivant sa dernière émission. N'ayant reçu aucun message, l'intervalle d'émission prévu est nécessairement libre, mais le mobile ou le véhicule doivent repousser tout de même, leur émission d'une durée aléatoire, multiple de 1 ms et inférieure à une récurrence (100 ms). Le mobile ou le véhicule peuvent alors se replacer en phase d'écoute du canal.

Lorsque arrive la deuxième tentative d'émission, le mobile émet, qu'il ait reçu ou non un message depuis sa dernière tentative d'émission. Il part donc dans la phase de décision d'émission et suit le cycle normal de la procédure pour retourner ensuite à la phase d'initialisation s'il n'a reçu aucun message pendant la récurrence suivante.

Avec le report, le mobile oui le véhicule émettent moins d'un message par 100 ms, mais ce n'est pas gênant car cela veut dire qu'il y'a aucun mobile ou véhicule pour les écouter.

La deuxième solution qui consiste à décaler l'instant d'émission est utilisée lorsque la solution exposée précédemment, efficace dans le cas de mobiles isolés, ne convient plus lorsque par exemple deux groupes isolés de mobiles arrivent, comme le montre la figure 7, en liaison par l'intermédiaire de deux mobiles synchronisés appartenant chacun à un des deux groupes. Dans ce cas, le réseau total est stabilisé mais les deux mobiles s'ignorent et ne se détectent même pas, leurs émissions ayant toujours lieu simultanément.

Dans l'exemple de la figure 7, le groupe 1 et le groupe 2 entrent en liaison par les mobiles A et B. Si A et B ont leurs émissions synchronisées, l'entrée en liaison des deux groupes ne perturbera en rien la loi de récurrence déterminée pour chacun des deux groupes, mais A et B ne peuvent jamais échanger des messages.

Pour éviter cela, et indiquer aux deux groupes qu'il y a eu une modification de liaison, il faut que A et B s'aperçoivent par eux-mêmes que leurs émissions sont en collision, puisque aucun mobile extérieur ne peut le leur indiquer. La solution pour pallier cet inconvénient est de faire émettre chaque mobile à son instant d'émission prévu par le reste de la procédure, mais avec un décalage déterminé de $+/- tr = 0.1$ ms, par exemple choisit aléatoirement à chaque émission. Ainsi, quelque soit l'état des mobiles synchronisés (isolés ou en réseau) ceux-ci pourront toujours détecter, au bout de quelques récurrences, que leurs messages sont en collision.

Lorsqu'un des mobiles a reconnu une collision, il décale alors son émission suivant la procédure de report d'émission décrite dans les paragraphes précédents.

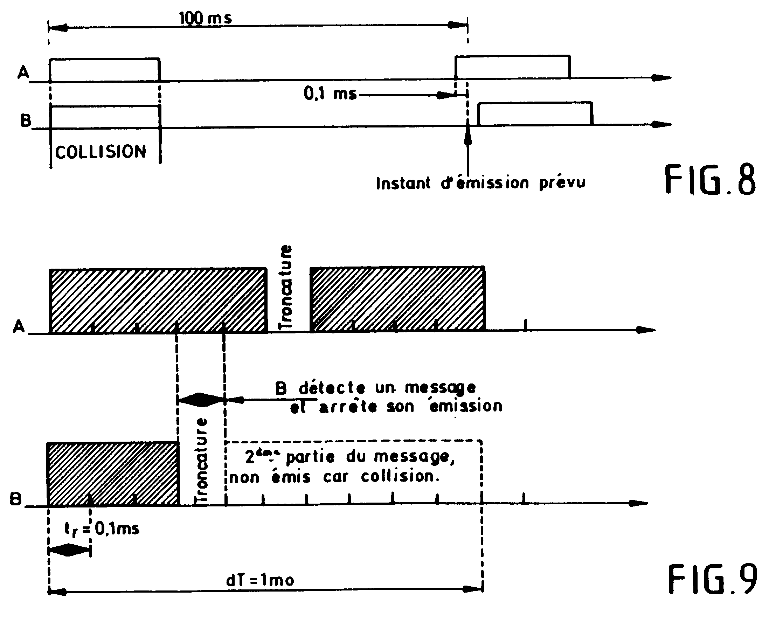

Enfin plutôt que de décaler l'instant d'émission de $\pm t_r$ la troisième solution consiste, comme le montre la figure 9, à diffuser les messages en deux parties séparées d'une durée $t_r$ sur le créneau de duré dT alloué à chaque véhicule ou mobile pour son émission, de façon qu'entre les deux parties de durée totale $dT-t_r$ l'intervalle $t_r$ soit disponible en réception et serve au mobile ou véhicule pour détecter la présence éventuelle d'une autre émission et donc d'une collision. De la sorte si le mobile ou le véhicule reçoivent un message sur le créneau $t_r$ il peut ainsi arrêter son émission et passer en procédure de report d'émission. L'instant de troncature dans l'intervalle dT est déterminé aléatoirement par rapport au début de l'émission. Cette durée aléatoire peut, par exemple, être comprise entre 0, 2 ms et 0,8 ms en prenant par exemple pour dT et $t_r$ les valeurs 1 ms et 0,1 ms respectivement. Le fait que le moment de troncature soit aléatoire, permet statistiquement aux deux mobiles synchronisés, de s'apercevoir de leur présence mutuelle au bout de quelques récurrences, si aucun autre véhicule extérieur ne peut le leur signifier avant.

**Revendications**

1. Procédé de transmission de données entre mobiles ou véhicules autonomes communiquant entre eux par voie hertzienne sur un canal radio unique avec une portée d'émission limitée et une récurrence d'émission T déterminée caractérisé en ce qu'il consiste à construire (1) dans chaque émetteur-récepteur de mobile ou véhicule des tables d'information consignant l'évolution dur canal radio en mémorisant pendant des intervalles de temps consécutifs de durée déterminée dT inférieurs à la période T de récurrence, les états "en collision" "occupé" ou "libre" du canal radio, à fixer dans chaque émetteur-récepteur des instants d'émission espacés de la période de récurrence T, à prédire l'état du canal pour chaque instant d'émission fixé en fonction de l'état du canal mémorisé à l'instant qui lui précède décalé de la période T et à décider d'émettre (2) à cet instant lorsque l'état du canal prédit n'est pas en collision (4) ou d'émettre à instant différé de l'instant prédit dans le cas contraire (5).

2. Procédé selon la revendication 1 caractérisé en ce que les tables d'information des mobiles ou véhicules comprennent une première table de mémorisation de l'état local du canal et une deuxième table de mémorisation de l'état global du canal.

3. Procédé selon la revendication 2 caractérisé en ce que la table d'état globale est construite à partie des contenus des tables d'état local du canal transmis par les autres mobiles ou véhicules.

4. Procédé selon l'une quelconque des revendications 1 à 3 caractérisé en ce qu'il consiste à déterminer l'état global du canal par intervalle de temps dT en affectant à chaque intervalle dT une valeur numérique calculée à partir d'une moyenne pondérée des états "libre", "occupé" ou "en collision" affectés chacun d'un coefficient, et à comparer chaque résultat de moyenne pondéré obtenu à deux valeurs de seuils prédéterminés respectivement $S_1$ et $S_2$.

5. Procédé selon la revendication 4 caractérisé en ce qu'il consiste à considérer : l'intervalle dT en collision si le résultat de la moyenne pondéré est supérieur au premier seuil $S_1$ :

   - l'intervalle dT "occupé" si le résultat de la moyenne pondérée est compris entre le premier seuil et le deuxième seuil $S_2$ ;
   - l'intervalle dT "libre" si le résultat de la moyenne pondérée est inférieur au deuxième seuil $S_2$.

6. Procédé selon l'une quelconque des revendications 1 à 5 caractérisé en ce qu'il consiste lorsqu'il y a collision à mémoriser les intervalles de temps dT libres durant l'intervalle de durée T précédent et à choisir aléatoirement le prochain instant d'émission dans l'intervalle T courant parmi les intervalles de temps homologues laissés libres dans l'intervalle T précédent.

## Patentansprüche

1. Verfahren zur Datenübertragung zwischen eigenständigen beweglichen Stationen oder Fahrzeugen, die miteinander über den Funkweg auf einem einzigen Funkkanal mit einem begrenzten Sendebereich und einer bestimmten Senderekursion T kommunizieren, dadurch gekennzeichnet, daß es darin besteht, in jedem Sender-Empfänger der beweglichen Station oder des Fahrzeugs Informationstabellen einzurichten (1), die die Entwicklung des Funkkanals aufzeichnen, indem sie während aufeinanderfolgender Zeitintervalle von bestimmter Dauer dT, die kleiner als die Rekursionsperiode T ist, die Zustände des Funkkanals "in Kollision", "besetzt" oder "frei" speichern, in jedem Sender-Empfänger Sendezeitpunkte in Abständen der Rekursionsperiode T festzuhalten, den Zustand des Kanals für jeden festgehaltenen Zeitpunkt in Abhängigkeit von dem Zustand des Kanals vorherzusagen, der an dem Zeitpunkt abgespeichert ist, der diesem versetzt um die Periode T vorausgeht, und zu entscheiden, zu diesem Zeitpunkt zu senden (2), wenn sich der vorhergesagte Zustand des Kanals nicht in Kollision (4) befindet, oder in dem entgegengesetzten Fall (5) an einem gegen den vorhergesagten Zeitpunkt verschobenen Zeitpunkt zu senden.

2. Verfahren nach Anspruch 1, dadurch gekennzeichnet, daß die Informationstabellen der beweglichen Stationen oder Fahrzeuge eine erste Tabelle zur Speicherung des lokalen Zustands des Kanals und eine zweite Tabelle zur Speicherung des globalen Zustands des Kanals enthalten.

3. Verfahren nach Anspruch 2, dadurch gekennzeichnet, daß die Tabelle für den globalen Zustand ausgehend von den von den anderen beweglichen Stationen oder Fahrzeugen übertragenen Inhalten der Tabellen für den lokalen Zustand des Kanals aufgebaut ist.

4. Verfahren nach einem der Ansprüche 1 bis 3, dadurch gekennzeichnet, daß es darin besteht, den globalen Zustand des Kanals pro Zeitintervall dT zu bestimmen, indem jedem Intervall dT ein numerischer Wert zugeordnet wird, der ausgehend von einem gewichteten Mittelwert der Zustände "frei", "besetzt" oder "in Kollision", denen jeweils ein Koeffizient zugeordnet ist, berechnet wird, und jedes Resultat des erhaltenen gewichteten Mittelwertes mit zwei vorherbestimmten Schwellenwerten $S_1$ bzw. $S_2$ zu vergleichen.

5. Verfahren nach Anspruch 4, dadurch gekennzeichnet, daß es darin besteht,

 - das Intervall dT als "in Kollision" zu betrachten, wenn das Resultat des gewichteten Mittelwertes größer als der erste Schwellenwert $S_1$ ist;
 - das Intervall dT als "besetzt" zu betrachten, wenn das Resultat des gewichteten Mittelwertes zwischen dem ersten Schwellenwert und dem zweiten Schwellenwert $S_2$ liegt;
 - das Intervall dT als "frei" zu betrachten, wenn das Resultat des gewichteten Mittelwertes kleiner als der zweite Schwellenwert $S_2$ ist.

6. Verfahren nach einem der Ansprüche 1 bis 5, dadurch gekennzeichnet, das es darin besteht, jedesmal wenn es eine Kollision gibt, die während des vorhergehenden Intervalls der Dauer T freien Zeitintervalle dT zu speichern und den nächsten Sendezeitpunkt in dem laufenden Zeitintervall T zufällig unter den in dem vorhergehenden Zeitintervall T entsprechenden frei gelassenen Zeitintervallen auszuwählen.

## Claims

1. Method of data transmission between independent vehicles or mobiles communicating with each other by radio link over a single radio channel with a limited transmission range and a defined transmission recurrence T, characterized in that it consists in constructing (1) in each mobile or vehicle transmitter/receiver, information tables marking the evolution of the radio channel by storing, during the consecutive time intervals of defined duration dT which are smaller than the recurrence period T, the "in collision", "busy" or "free" states of the radio channel, in setting, in each transmitter/receiver, transmission instants spaced by the recurrence period T, in predicting the state of the channel for each transmission instant set on the basis of the state of the channel stored in memory at the instant which precedes it, shifted by the period T, and in deciding to transmit (2) at this instant when the predicted state of the channel is not in collision (4), or to transmit at an instant later than the predicted instant in the opposite case (5).

2. Method according to Claim 1, characterized in that the information tables of the mobiles or vehicles comprise a first table for memory storage of the local state of the channel and a second table for memory storage of the global state of the channel.

3. Method according to Claim 2, characterized in that the global state table is constructed from the contents of the local state tables of the channel transmitted by the other mobiles or vehicles.

4. Method according to any one of Claims 1 to 3, characterized in that it consists in determining the global state of the channel per time interval dT, by allocating each time interval dT a numerical value calculated from a weighted mean of the "free", "busy" or "in collision" states, each allocated a coefficient, and in comparing each weighted-mean result obtained with two predetermined threshold values, $S_1$ and $S_2$ respectively.

5. Method according to Claim 4, characterized in that it consists in regarding: the interval dT in collision if the result of the weighted mean is higher than the first threshold $S_1$:

   - the interval dT "busy" if the result of the weighted mean lies between the first threshold and the second threshold $S_2$;
   - the interval dT "free" if the result of the weighted mean is less than the second threshold $S_2$.

6. Method according to any one of Claims 1 to 5, characterized in that it consists, when there is a collision, in storing in memory the time intervals dT which are free during the preceding interval of duration T, and in randomly choosing the next transmission instant within the current interval T from among the corresponding time intervals left free in the preceding interval T.

FIG.1

Construction:
- Table canal Locale
- Table canal Globale
1

Instant Décision ?   NON
2

OUI

Décision Emission ?   NON
3

OUI

Emission Message + Signalisation
4

report avec Choix prochain Instant Décision
5

Canal Radio

|OCCUP |OCCUP |LIBRE | LIBRE | OCCUP |COLLIS| COLLIS | LIBRE |

Temps du Véhicule

dT= 1ms

☐ Message   ▨ Collision

FIG.2

8

99 éléments d'information envoyés par
le Mobile Emetteur

| Message | LIBRE | COLLIS. | OCCUPE | OCCUP. | LIBRE | LIBRE |

Canal

Table d'état Global du Canal

| Interv. 1 | Interv. 2 | Interv. 3 | Interv. 4 |

Horloge interne Mobile Récept.

Instant de Réception
du Message

Instant d'émission prévu **FIG.3**

LIBRE (= 0)    OCCUPE (= 1)    COLLIS. ( = 2)

Table Locale reçue

0 × 0.2        1 × 0.8        1 × 0.2    2 × 0.8

intervalle N            intervalle N+1

Table Globale

$\frac{dT}{n} = 0.1$ ms

dT = 1ms

**FIG.4**

Emission du mobile A

L | C | C

Table Locale de A Emise

L | C | C

Table Locale de A Calculée

Emission du mobile B

Début nouvelle Table

C | C        L | L | L

Table Globale de B

Instant d'émission prévu

Début ancienne Table    Instant d'émission
                        reporté

Emission du mobile C

Début nouvelle Table

C | C        L | L | L

Table Globale de C

Message émis

Instant d'émission
prévu                Instant d'émission
Début ancienne Table    reporté

**FIG.5**

FIG.7

FIG.6

100 ms

0,1 ms

A

B

COLLISION

Instant d'émission prévu

FIG.8

Troncature

A

Troncature

B détecte un message
et arrête son émission

2ème partie du message,
non émis car collision.

B

$t_r = 0,1ms$

$dT = 1mo$

FIG.9

EP 0 486 362 B1